# EUROPEAN PATENT APPLICATION

(11) **EP 3 293 712 A1**
(43) Date of publication of application: **14.03.2018**
(21) Application number: 17190641.5
(22) Date of filing: 12.09.2017
(51) Int. Cl.: G07G 1/00, G07G 1/14, G06Q 20/20

(54) **CHECKOUT SYSTEM HAVING SEPARATE TERMINALS FOR COMMODITY REGISTRATION AND CHECKOUT PROCESSING**

(30) Priority: 12.09.2016 JP 2016177681
(71) Applicant: Toshiba TEC Kabushiki Kaisha, Tokyo 141-8562 (JP)
(72) Inventor: SHIMURA, Takahiro, Shinagawa-ku,, Tokyo 141-8562 (JP)
(74) Representative: Takeuchi, Maya

(57) **Abstract**

A checkout system includes a registration apparatus configured to execute registration of commodities selected for purchase by a customer, and a checkout apparatus configured to execute checkout processing based on commodity registration information from the registration apparatus. The registration apparatus includes a processor that is programmed to select the checkout apparatus as an execution destination of the checkout processing based on a use state of the checkout apparatus and a priority order of the checkout apparatus assigned in relation to the registration apparatus and to issue an instruction to the checkout apparatus indicating that the checkout apparatus is designated as an execution destination of the checkout processing. The checkout apparatus includes a display and a processor programmed to control the display of the checkout apparatus to display a notification that the checkout apparatus is designated as the execution destination of the checkout processing.

## Description

### FIELD

The present invention relates to a checkout processing technology in general, and embodiments described herein relate more particularly to a checkout system having separate terminals for commodity registration and checkout processing and a method for notifying a customer of the checkout apparatus as an execution destination of a checkout processing.

### BACKGROUND

Conventionally, a semi-self-type checkout system including a registration apparatus for executing a registration operation by a store clerk, i.e., operator, to register commodity information of a commodity and a checkout apparatus for executing a checkout processing by a customer based on the registered information of the commodity, to settle a sales-transaction is installed in a store such as a supermarket.

By installing such a semi-self-type checkout system in a store, it is possible to reduce overcrowding at a settlement area at which both registration and checkout operations are carried out. However, if a plurality of checkout apparatuses are installed in the settlement area, a customer who comes to the store for the first time or a customer who is unfamiliar with the semi-self-type checkout system may become confused about which one of the checkout apparatuses should be used at the time of executing the checkout processing.

To solve such problems, there is provided a checkout system, comprising:
a registration apparatus configured to execute registration of commodities selected for purchase by a customer; and
a checkout apparatus configured to execute checkout processing based on commodity registration information from the registration apparatus, wherein
the registration apparatus includes a processor that is programmed to select the checkout apparatus as an execution destination of the checkout processing based on a use state of the checkout apparatus and a priority order of the checkout apparatus assigned in relation to the registration apparatus and to issue an instruction to the checkout apparatus indicating that the checkout apparatus is designated as an execution destination of the checkout processing, and
the checkout apparatus includes a display and a processor programmed to control the display of the checkout apparatus to display a notification that the checkout apparatus is designated as the execution destination of the checkout processing.

Preferably, the checkout apparatus is selected from a plurality of checkout apparatuses, each of which is networked with the registration apparatus so that the commodity registration information can be transmitted from the registration apparatus to any one of the checkout apparatuses.

Preferably still, the priority order is assigned in an ascending order of a distance from the registration apparatus to each of the checkout apparatuses.

Preferably yet, the registration apparatus includes a display, and the processor is configured to control the display of the registration apparatus to display information indicating the checkout apparatus designated as the execution destination of the checkout processing.

Suitably, the registration apparatus includes a printer configured to print a voucher with a code that is to be read by the checkout apparatus to identify the commodity registration information, and with information indicating the checkout apparatus designated as the execution destination of the checkout processing.

Suitably still, the information indicating the checkout apparatus designated as the execution destination of the checkout processing is displayed on the display of the checkout apparatus.

Suitably yet, the display of the checkout apparatus is a display mounted on a main body of the checkout apparatus and used for the checkout processing.

Suitably further, the display of the checkout apparatus is a display mounted on a display pole extending above a main body of the checkout apparatus and used for displaying an error condition of the checkout apparatus.

The invention also relates to a method for processing a checkout in a checkout system including a registration apparatus and a plurality of checkout apparatuses, the method carried out by the registration apparatus, comprising:
executing commodity registration to generate commodity registration information;
upon completion of commodity registration, acquiring operating states of the checkout apparatuses and selecting one of the checkout apparatuses that are in a standby state as an execution destination of the checkout processing;
printing a code that is used during checkout processing to identify the commodity registration information; and
displaying information indicating the checkout apparatus designated as the execution destination of the checkout processing.

Suitably, each of the checkout apparatuses is networked with the registration apparatus so that the commodity registration information can be transmitted from the registration apparatus to any one of the checkout apparatuses.

In the above method, one of the checkout apparatuses is preferably selected based on a predefined priority order.

Also in the above method, the priority order is assigned in an ascending order of a distance from the registration apparatus to each of the checkout apparatuses.

Suitably still, the method further comprises
printing the information indicating the checkout apparatus designated as the execution destination of the checkout processing along with the code.

The invention further concerns a method for processing a checkout in a checkout system including a registration apparatus configured to execute registration of commodities selected for purchase by a customer, and a plurality of checkout apparatuses, the method carried out by one of the checkout apparatuses designated by the registration apparatus as an execution destination of checkout processing for commodity registration information generated by the registration apparatus, comprising:
displaying a standby state; and
upon being notified of designation as the execution destination of checkout processing, switching from a display of the standby state to a display of information from the registration apparatus indicating designation as the execution destination of checkout processing; and
executing the checkout processing based on the commodity registration information including input of payment from the customer and output of receipt along with any change.

Preferably, the method further comprises:
after switching and before executing, reading a code supplied by the customer and retrieving the commodity registration information using the code.

Preferably still, the display of information from the registration apparatus indicating designation as the execution destination of checkout processing is displayed on a main display that is used during the checkout processing.

Preferably yet, the display of information from the registration apparatus indicating designation as the execution destination of checkout processing is displayed on a display mounted on a display pole extending above a main body of the checkout apparatus and used for displaying an error condition of the checkout apparatus.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a schematic diagram illustrating components of a checkout system according to an embodiment;
Fig. 2 is a perspective view a registration apparatus;
Fig. 3 is a perspective view of a checkout apparatus;
Fig. 4 is a hardware block diagram of the checkout system;
Fig. 5 is a functional block diagram of the checkout system;
Fig. 6 is a state transition diagram illustrating a state transition of a screen displayed on a display device of the checkout apparatus;
Fig. 7 is a flowchart illustrating an example of a flow of a processing executed by the registration apparatus and the checkout apparatus;
Fig. 8 is a diagram illustrating a selection screen for selecting a payment option on a display device for store clerk of the registration apparatus;
Fig. 9 is a diagram illustrating a guidance screen displayed on a display device for guiding the customer at the registration apparatus to a selected checkout apparatus; and
Fig. 10 is a flowchart illustrating an example of a flow of a selection processing of selecting a checkout apparatus by the registration apparatus.

### DETAILED DESCRIPTION

In accordance with an embodiment, a checkout system includes a registration apparatus configured to execute registration of commodities selected for purchase by a customer, and a checkout apparatus configured to execute checkout processing based on commodity registration information from the registration apparatus. The registration apparatus includes a processor that is programmed to select the checkout apparatus as an execution destination of the checkout processing based on a use state of the checkout apparatus and a priority order of the checkout apparatus assigned in relation to the registration apparatus and to issue an instruction to the checkout apparatus indicating that the checkout apparatus is designated as an execution destination of the checkout processing. The checkout apparatus includes a display and a processor programmed to control the display of the checkout apparatus to display a notification that the checkout apparatus is designated as the execution destination of the checkout processing.

### (Description of the Components of the Checkout Apparatus)

Hereinafter, with reference to the accompanying drawings, an embodiment of a checkout apparatus, a checkout system and a notifying method is described in detail. In the present embodiment, as an embodiment of the checkout apparatus, the checkout system and the notifying method, a checkout system (semi-self-type checkout system) including a registration apparatus, e.g., a register, operated by an operator to execute a sales registration of a commodity purchased by a customer and a checkout apparatus operated by the customer to execute a checkout processing based on commodity information of the commodity to which the sales registration has been executed, is described as an example. As used herein, "checkout processing" means processing of payment by the customer for the commodities that the customer has selected to purchase and have been registered by the registration apparatus.

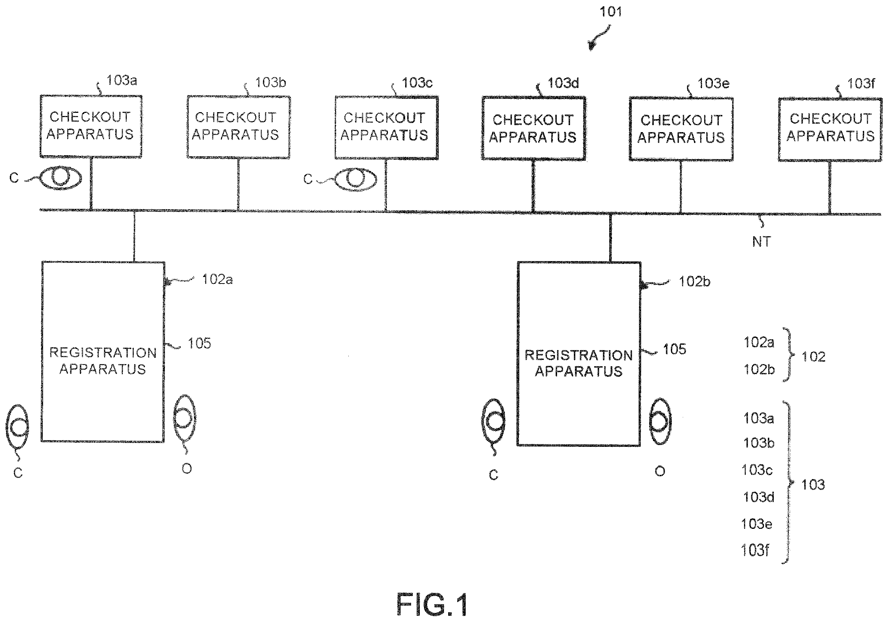

Fig. 1 is a schematic diagram illustrating the components of a checkout system 101 according to the embodiment. As shown in Fig. 1, the checkout system 101 is provided with a registration apparatus 102 operated by a store clerk O and a checkout apparatus 103 operated by a customer C. Fig. 1 shows an example with two (2) registration apparatuses (102a and 102b) and six (6) checkout apparatuses (103a, 103b, 103c, 103d, 103e and 103f). Each of the registration apparatuses (102a and 102b) has the same structure and function. Each of the checkout apparatuses (103a, 103b, 103c, 103d, 103e and 103f) has the same structure and function.

The registration apparatuses (102a and 102b) are installed on a work table 105, respectively. The store clerk O and the customer C face each other across the work table 105. Each of the registration apparatuses (102a and 102b) and each of the checkout apparatuses (103a, 103b, 103c, 103d, 103e and 103f) are electrically connected to each other via a network NT such as a LAN (Local Area Network).

### (Description of the Registration Apparatus)

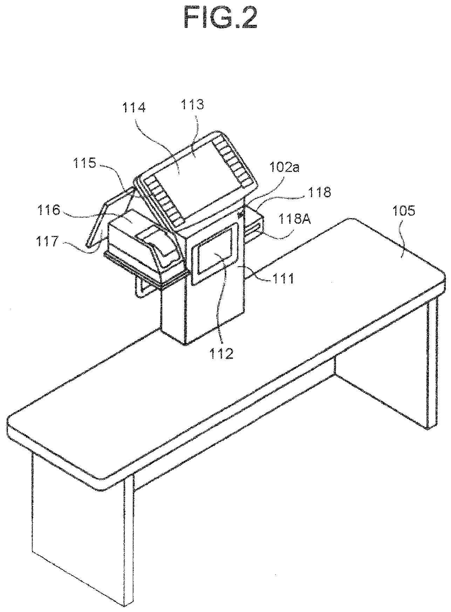

First, the registration apparatus 102a operated by the store clerk O is described. Since the registration apparatuses (102a and 102b) have the same structure and function, only the registration apparatus 102a is described below. Fig. 2 is a perspective view of the registration apparatus 102a. As shown in Fig. 2, the registration apparatus 102a installed on an upper surface of the work table 105 is constituted based on a vertical type scanner 111 having a reading window 112. The scanner 111 reads a commodity code from a captured code symbol, using, for example, a following general object recognition technology. The scanner 111 may be a scanning type device that reads the commodity code included in the code symbol by scanning the code symbol (e.g., barcode) attached to a commodity with a laser light and analyzing the laser light reflected from the code symbol.

The registration apparatus 102a is provided with a display device 114 for a store clerk on which a touch panel 113 is laminated and an operation section 115. The display device 114 displays a commodity name and price of the commodity photographed by an image capturing section of the scanner 111. The touch panel 113 and the operation section 115 assist input of the commodity information by the store clerk.

A printer 116 is provided at the left side of the registration apparatus 102a if viewed from the store clerk O side. The printer 116 prints information including a transaction number, coded as a barcode, for identifying a transaction to which sales registration is executed with the registration apparatus 102a to issue it as a voucher.

A card reader 118 is provided at the right side of the registration apparatus 102a if viewed from the store clerk O side. The card reader 118 magnetically reads and writes information from and to a credit card (not shown) inserted from an insertion port 118A. The credit card is carried by the customer C, and magnetically stores a customer code for identifying the customer C, accumulated points, and the like.

A display device 117 for customer which displays information necessary for a transaction to the customer C is provided at the opposite side of the display device 114.

The registration apparatus 102a reads a code such as a barcode or a QR code® attached to the commodity to specify the commodity based on the commodity code included in the code.

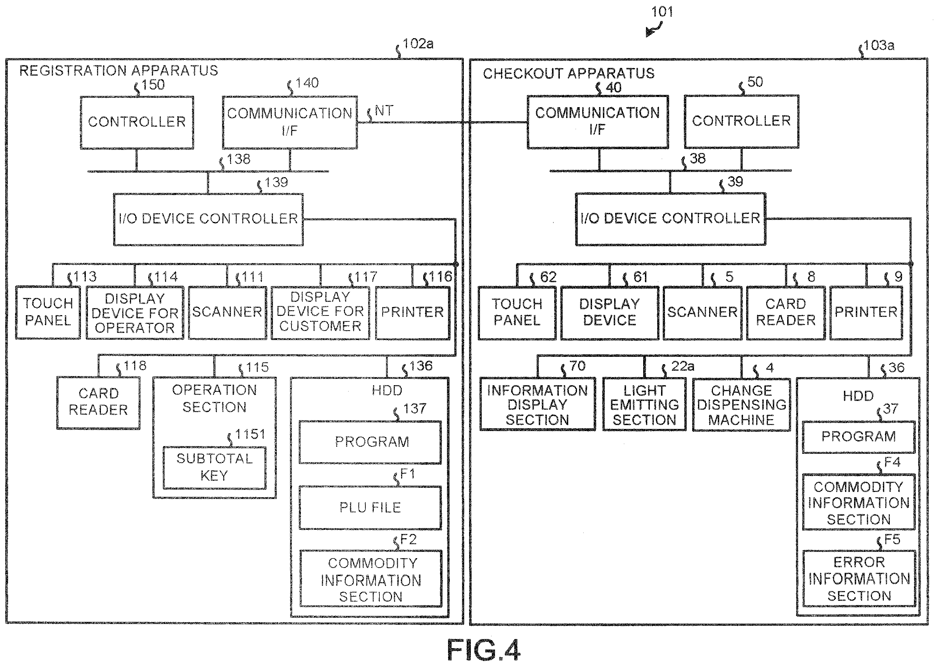

The registration apparatus 102a displays a screen for receiving input of a confirmation of the commodity specified based on the commodity code and a quantity of the commodity on the display device 114. Then, based on the information including the commodity code input, the quantity input and the like, the registration apparatus 102a reads out commodity information such as a commodity category, the commodity code, a commodity name and unit price of the commodity corresponding to the commodity code from a PLU file F1 (refer to Fig. 4) and stores the commodity information in a commodity information section F2 (refer to Fig. 4) as described later.

In such a registration apparatus 102a, if a basket containing the commodity to be purchased by the customer C is placed on the right side of the work table 105 in Fig. 2, the store clerk O takes out the commodity from the basket and holds the commodity code attached to the commodity over a front surface of the reading window 112. Then, the scanner 111 reads out the commodity code. The registration apparatus 102a executes a sales registration processing in which the commodity information is read out based on the read commodity code and stored in the commodity information section F2.

### (Description of the Checkout Apparatus)

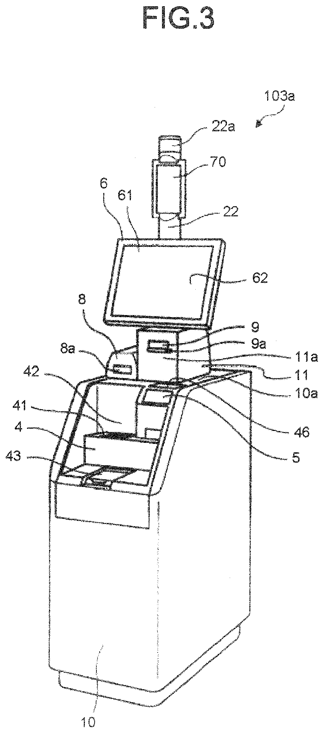

Next, the checkout apparatus 103a operated by the customer C to execute a checkout processing is described. Since the checkout apparatuses (103a, 103b, 103c, 103d, 103e and 103f) have the same structure and function, only the checkout apparatus 103a is described below. Fig. 3 is a perspective view of the checkout apparatus 103a.

The checkout apparatus 103a includes a first housing 10 and a second housing 11. The first housing 10 includes a change dispensing machine 4 and a scanner 5. The second housing 11, placed on an upper surface 10a of the first housing 10, includes a display operation panel 6, a printer 9 and a card reader 8.

The scanner 5 has the same structure as the scanner 111. The scanner 5 reads a code symbol such as a barcode that is held in front of an image capturing window provided at the upper part of the first housing 10. The image capturing section outputs the commodity code obtained by decoding the read code symbol to a controller 150 (refer to Fig. 4). The scanner 5 reads a transaction number for specifying the transaction from the barcode printed on the voucher issued by the registration apparatus 102a.

The display operation panel 6 includes a display device 61 showing an example of a display section and a touch panel 62, and is placed on the second housing 11. The display device 61 is, for example, a liquid crystal panel, to display information relating to an operation state of the checkout apparatus 103a with images or characters. The touch panel 62 is provided on the surface of the display device 61, and outputs information corresponding to a position thereon touched by the customer C to the controller 50 (refer to Fig. 4).

The card reader 8 is disposed at the left side of the second housing 11 and on the upper surface 10a of the first housing 10. The card reader 8 reads and writes information from and to a credit card inserted from a card insertion port 8a.

The change dispensing machine 4 includes a coin insertion port 46, a bill insertion port 41, a bill dispensing port 42, and a coin dispensing section 43. The change dispensing machine 4 stores a bill inserted into the bill insertion port 41 in a bill storage section (not shown). The change dispensing machine 4 also stores a coin inserted into the coin insertion port 46 in a coin storage section (not shown). Then, the change dispensing machine 4 dispenses bills to the bill dispensing port 42 and coins to the coin dispensing section 43 in response to a change dispensing request from the controller 50. For example, if a change amount is 1300 yen, one 1000-yen bill is dispensed to the bill dispensing port 42, and coins of 300 yen in total are dispensed to the coin dispensing section 43.

The printer 9 has a printing section (not shown) built in the second housing 11 and a receipt issuing port 9a provided on the front surface 11a of the second housing 11. Under the control of the controller 50, the printer 9 issues a receipt on which the transaction information is printed from the receipt issuing port 9a.

In the checkout apparatus 103a, a display pole 22 of a cylindrical shape is vertically arranged at the rear side of the upper surface 10a of the first housing 10. The display pole 22 has a light emitting section 22a which selectively emits blue light and red light at an upper tip. The light emitting section 22a displays a current status of the checkout apparatus 103a. The emitting state of the light emitting section 22a can be set appropriately. For example, if a processing section of the checkout apparatus 103a operates normally, the light emitting section 22a emits blue light. In the checkout apparatus 103a, if the processing section is in a caution state close to an error, the light emitting section 22a blinks with the blue light. The caution state includes, for example, a state in which the receipt paper stored in the printer 9 is about to run out (near end) and a state in which the amount of coins and bills stored in the change dispensing machine 4 is smaller than a minimum storage amount required as change. The processing section refers to a structure relating to the checkout processing in the checkout apparatus 103a, and includes, for example, the change dispensing machine 4, the scanner 5, the card reader 8, the printer 9 and the like.

On the other hand, if the processing section of the checkout apparatus 103a is in an error state, the light emitting section 22a emits red light. Since the display pole 22 has the light emitting section 22a at the upper tip of the display pole 22, the store clerk O can confirm a luminescence color of the light emitting section 22a from a distance and take action according to the light emitting state.

The display pole 22 has an information display section 70 below the light emitting section 22a. For example, the information display section 70 is composed of a liquid crystal panel to display image information and character information. The information display section 70 is fixedly installed with a display surface thereof facing the same direction as the display device 61. In the information display section 70, for example, a content of an error occurring in the checkout apparatus 103a is displayed.

The customer C operates the checkout apparatus 103a and thus, the checkout apparatus 103a executes the checkout processing based on the transaction information on which the sales registration is executed at the registration apparatus 102a. The checkout processing refers to a processing of displaying the total amount relating to the transaction based on the transaction information and a processing of carrying out settlement based on the deposited amount received from the customer C.

In such a checkout system 101, the registration apparatus 102a reads out the commodity information of the commodity based on the read commodity code to execute the sales registration processing. The registration apparatus 102a then transmits the commodity information to the checkout apparatus 103a and issues a voucher on which a barcode including a transaction number for specifying the transaction is printed. If the customer C uses the scanner 5 of the checkout apparatus 103a to read the barcode printed on the issued voucher, the checkout apparatus 103a specifies the transaction based on the transaction number, and the checkout apparatus 103a executes the checkout processing relating to the specified transaction.

### (Description of the hardware structure of the checkout system)

Next, the hardware structure of the checkout system 101 is described. Fig. 4 is a block diagram illustrating the hardware structure of the checkout system 101. As shown in Fig. 1, the checkout system 101 has a plurality of the registration apparatuses 102 and a plurality of the checkout apparatuses 103; however, for the sake of simplifying the description, a constitution including one registration apparatus 102a and one checkout apparatus 103a is described.

As shown in Fig. 4, the registration apparatus 102a has the controller 150. The controller 150 includes a CPU (Central Processing Unit) for executing a control processing, a ROM (Read Only Memory) and a RAM (Random Access Memory) which are storage media (both are not shown). The ROM stores various programs executed by the CPU and various data. The RAM temporarily stores data and programs at the time the CPU executes various programs. The RAM also stores various screen display data displayed on the display device 114.

The controller 150 is connected to the scanner 111 and the touch panel 113 via an I/O (Input/Output) device controller 139 and a bus line 138. The controller 150 is connected to the display device 114 and the operation section 115 such as a keyboard via the I/O device controller 139 and the bus line 138. The controller 150 is connected to the printer 116, the display device 117, the card reader 118, and an HDD (Hard Disk Drive) 136 via the I/O device controller 139 and the bus line 138.

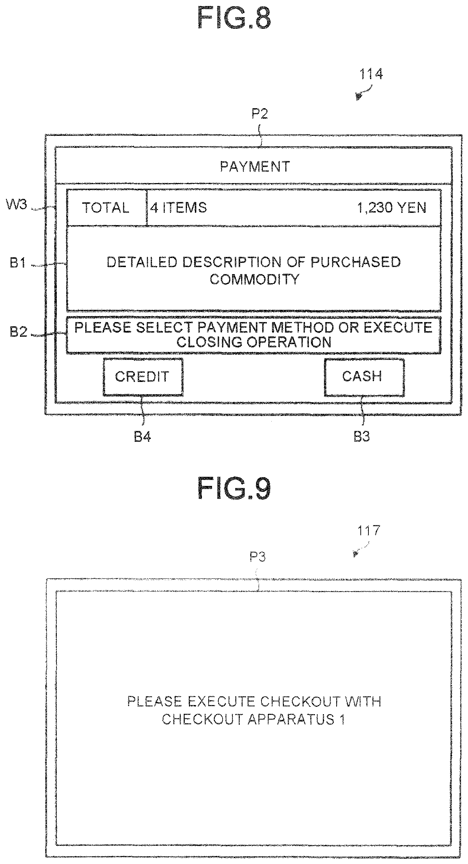

The operation section 115 includes a subtotal key 1151 for declaring end of input of the commodity code in the transaction. On the touch panel 113, soft switches such as keys (a cash key B3 and a credit key B4 (refer to Fig. 8) described later) for selecting a payment method of charge are displayed.

The HDD 136 stores a program 137 executable by the CPU of the controller 150 and stores the PLU file F1 and the commodity information section F2. The PLU file F1 stores the commodity code uniquely assigned to each commodity in association with the commodity information relating to the commodity such as the name and price of the commodity and the commodity category. In the case where the commodity is specified by the general object recognition, the PLU file F1 also stores feature amount such as a tint and an unevenness condition of the surface that are read from a commodity image. The commodity information section F2 stores by commodity code the commodity information read from the PLU file F1 corresponding to the commodity code read by the scanner 111.

The program 137 executed by the CPU of the controller 150 may be recorded in a computer-readable recording medium such as a CD-ROM, a FD (Flexible Disk), a CD-R, a DVD (Digital Versatile Disk) and the like in the form of installable or executable file to be provided.

Further, the program 137 executed by the CPU of the controller 150 is stored in a computer connected with a network and downloaded via the network to be supplied. The program 137 executed by the CPU of the controller 150 may be supplied or distributed via the network such as the Internet.

The controller 150 communicates with a store server (not shown) connected to a network NT and the checkout apparatus 103a via a communication I/F 140.

In addition, as shown in Fig. 4, the checkout apparatus 103a comprises a controller 50 having a CPU, and a ROM (not shown) and a RAM (not shown) as storage media. The ROM stores various programs executed by the CPU and various data. The RAM temporarily stores data and programs at the time the CPU executes various programs and stores sales data indicating a sales record of the commodity and various screen display data displayed on the display device 61.

The controller 50 is connected to the touch panel 62, the display device 61, the scanner 5, the card reader 8, the printer 9, the change dispensing machine 4, the light emitting section 22a, the information display section 70 and the HDD 36 via an I/O device controller 39 and a bus line 38.

The card reader 8 reads out information on the credit card of the customer C inserted from the card insertion port 8a. The printer 9 prints a receipt after the checkout processing to issue it from the receipt issuing port 9a. The change dispensing machine 4 executes a deposit processing of the bill inserted into the bill insertion port 41 or the coin inserted into the coin insertion port 46. The change dispensing machine 4 dispenses change to the customer C in response to a request from the controller 50.

In the HDD 36, a program 37 executable by the controller 50 is stored. The HDD 36 includes a commodity information section F4 for storing the commodity information received from the registration apparatus 102a and an error information section F5 for storing a pattern showing the content of the error displayed on the information display section 70. Specifically, the error information section F5 stores display information as an icon representing the content of the error. For example, in the change dispensing machine 4, if an error in which a 10-yen coin to be dispensed as change occurs, the information display section 70 displays error information in which, for example, 10-yen coin is replicated on a red background color so that the store clerk O can recognize the content of the error at a glance. In the printer 9, if the receipt paper runs out, the information display section 70 displays error information in which a rolled receipt paper is replicated on a red background color, for example.

The program 37 executed by the CPU of the controller 50 may be recorded in a computer-readable recording medium such as a CD-ROM, a FD (Flexible Disk), a CD-R, a DVD (Digital Versatile Disk) and the like in the form of installable or executable file to be provided.

Further, the program 37 executed by the CPU of the controller 50 is stored in a computer connected with a network and downloaded via the network to be supplied. The program 37 executed by the CPU of the controller 50 of the checkout apparatus 103a may be supplied or distributed via the network such as the Internet.

The controller 50 communicates with the store server (not shown) connected via the network NT such as a LAN via the communication I/F 40 and the registration apparatus 102a.

### (Description of Functional Components of the Checkout System)

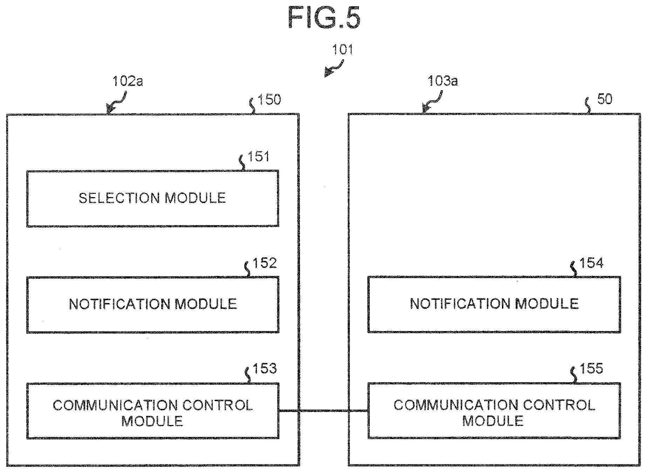

Next, the functional components of the checkout system 101 are described. Fig. 5 is a functional block diagram illustrating the functional components of the checkout system 101.

The controller 150 of the registration apparatus 102a functions as a selection module 151, a notification module 152, and a communication control module 153 by executing the program 137 stored in the ROM or the HDD 136 (Fig. 4).

The selection module 151 executes a selection processing in which the checkout apparatus (103a ∼ 103f) for executing the checkout processing is selected. Specifically, the selection module 151 selects the checkout apparatus (103a ∼ 103f), that is not currently executing the checkout processing, in other words, in a standby state from the checkout apparatuses (103a ∼ 103f). Further, the selection module 151 designates the checkout apparatus (103a ∼ 103f) located closest to the registration apparatus 102a (which executes the registration processing) among the checkout apparatuses (103a ∼ 103f) in the standby state. It is assumed that distances between each of the registration apparatuses (102a and 102b) and each of the checkout apparatuses (103a ∼ 103f) are measured in advance and stored in the HDD 136.

The notification module 152 displays identification information K assigned to the checkout apparatus (103a ∼ 103f) designated by the selection module 151 in advance on the display device 117 (Fig. 2) to notify the customer C of the checkout apparatus. The identification information K assigned to the checkout apparatus (103a ∼ 103f) includes arbitrary numerical values and alphabets which can uniquely specify checkout apparatuses (103a ∼ 103f), for example, "1" for the checkout apparatus 103a, "2" for the checkout apparatus 103b, ....

The communication control module 153 is an example of a transmission module. The communication control module 153 transmits information that the checkout apparatus is designated by the selection module 151 of the registration apparatus 102a via the network NT (Fig. 1), to the checkout apparatus (103a ∼ 103f) selected by the selection module 151 from the checkout apparatuses (103a ∼ 103f) by controlling the communication I/F 140 shown in Fig. 4. Specifically, the communication control module 153 transmits the transaction information such as the total amount information registered in the registration apparatus 102a to the checking apparatus (any one of 103a ∼ 103f) designated by the selection module 151.

The controller 50 of the checkout apparatus 103a functions as a notification module 154 and a communication control module 155 by executing the program 37 stored in the ROM or the HDD 36.

If the transaction information is transmitted from the registration apparatus 102a, the notification module 154 displays the identification information K such as the number assigned to the checkout apparatus 103a itself in advance on the display device 61 (Fig. 3). As a result, the checkout apparatus 103a notifies the customer C that the checkout apparatus 103a itself is designated by the selection module 151.

The communication control module 155 is an example of the reception module. The communication control module 155 receives information indicating that the checkout apparatus 103a is designated as a checkout apparatus which executes the checkout processing from the registration apparatus 102a. Specifically, the communication control module 155 controls the communication I/F 140 shown in Fig. 4 to receive the transaction information transmitted from the registration apparatus 102a via the network NT.

### (Description of State Transition of Screen Displayed On the Display Device of the Checkout Apparatus)

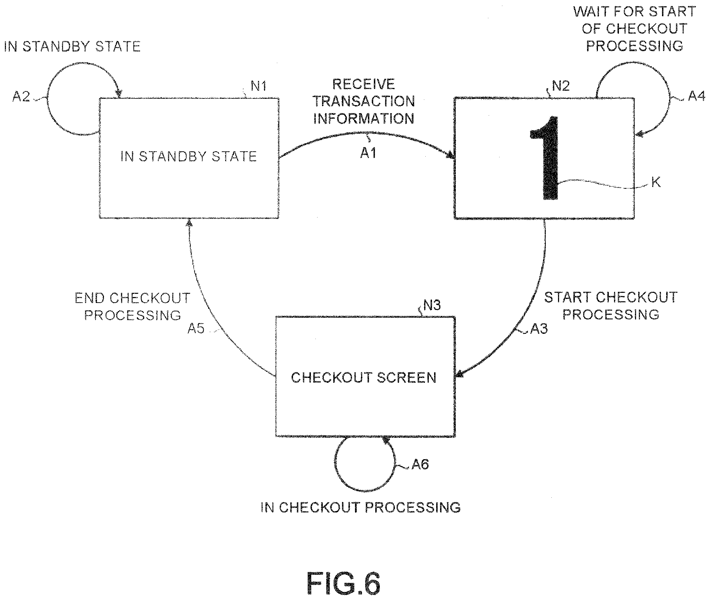

Next, a state transition of the screen displayed on the display device 61 of the checkout apparatus 103a is described. Fig. 6 is a state transition diagram illustrating a state transition of the screen displayed on the display device 61 of the checkout apparatus 103a.

As shown in Fig. 6, if the checkout apparatus 103a is in a standby state, a screen indicating that the display device 61 in a standby state is displayed (screen N1). Subsequently, the selection module 151 of the registration apparatus 102a executes the selection processing to designate the checkout apparatus 103a. The communication control module 153 (in particular, transmission module) of the registration apparatus 102a transmits the transaction information to the designated checkout apparatus 103a. Then, if the communication control module 155 (in particular, reception module) of the checkout apparatus 103a receives the transaction information (arc A1), the notification module 154 displays the identification information K for specifying the checkout apparatus 103a on the display device 61 of the checkout apparatus 103a (screen N2). The screen N2 in Fig. 6 is an example in which "1", identification number assigned to the checkout apparatus 103a, is displayed as the identification information K.

On the other hand, if the checkout apparatus 103a in the standby state maintains the standby state (arc A2), the display device 61 continues displaying the screen N1 indicating that the checkout apparatus 103a is in the standby state.

When the checkout apparatus 103a waits for the start of the checkout processing while displaying the screen N2, the display device 61 continues displaying the screen N2 on which "1", identification information K for specifying the checkout apparatus 103a, is displayed (arc A4).

In the screen N2, if the checkout processing is started (arc A3), the display device 61 displays a screen N3, i.e., a checkout screen. The checkout screen N3 displays the name of the commodity, the unit price of the commodity, the quantity of the commodity, the total price and the like although an actual example is not shown in the diagram.

While the checkout processing is executed, the display device 61 continues displaying the screen N3 (arc A6).

On the other hand, if the checkout processing is ended (arc A5), the checkout apparatus 103a proceeds to the standby state and the screen N1 is displayed on the display device 61 again.

### (Description of Flow of Processing Executed by the Registration Apparatus and the Checkout Apparatus)

A flow of the processing executed by the registration apparatus 102a and the checkout apparatus 103 a of the checkout system 101 according to the embodiment is described below.

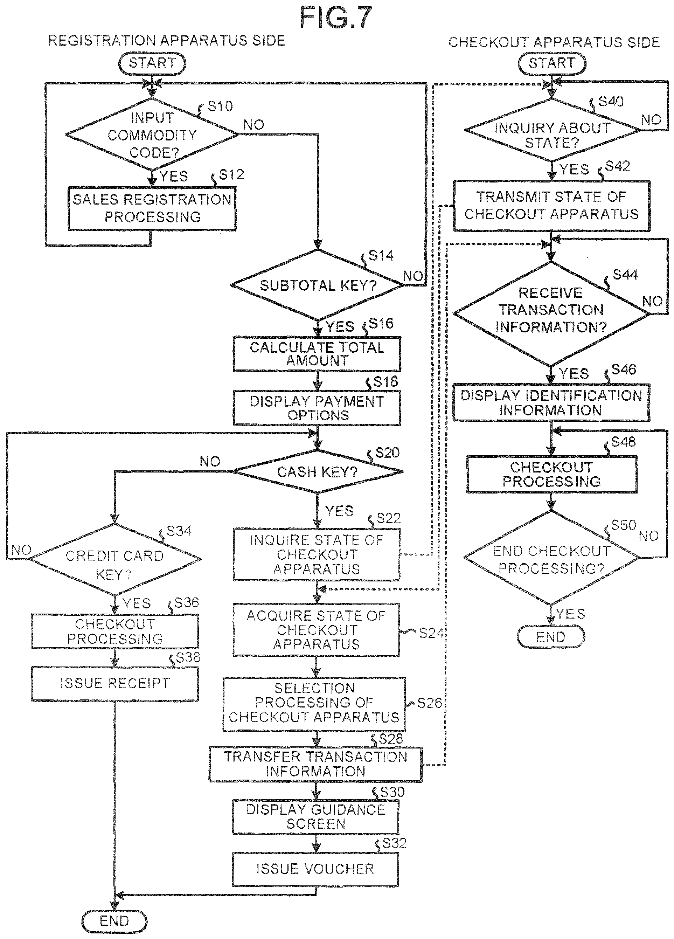

Fig. 7 is a flowchart illustrating an example of the flow of the processing executed by the registration apparatus 102a and the checkout apparatus 103a. The controller 150 of the registration apparatus 102a and the controller 50 of the checkout apparatus 103a carries out the sequence of steps of the flowchart in Fig. 7 according to the program 137 and the program 37, respectively. For the convenience of description, in Fig. 7, the registration apparatus 102a designates the checkout apparatus 103a in the selection processing.

The controller 150 of the registration apparatus 102a determines whether or not the commodity code, i.e., specifying information for specifying the commodity, is read by the scanner 111 (Act S10). If it is determined that the commodity code is read (Yes in Act S10), the controller 150 executes the sales registration processing in which the commodity information of the corresponding commodity is read from the PLU file F1 based on the read commodity code and the commodity information is stored in the commodity information section F2 (Act S12). The controller 150 returns to the processing in Act S10 and repeats the processing in Act S10 and Act S12 until the commodity codes of all the commodities are read.

On the other hand, if it is determined that the commodity code is not read (No in Act S10), the controller 150 determines whether or not the subtotal key 1151 is operated (Act S14).

If it is determined that the subtotal key 1151 is operated (Yes in Act S 14), the controller 150 calculates the total amount based on the commodity information of the commodity to which the sales registration processing is executed in Act S12 (Act S16). If the subtotal key 1151 is not operated (No in Act S14), the controller 150 returns to the processing in Act S10.

Next, the controller 150 displays a selection screen P2 (refer to Fig. 8) which displays different payment options for the transaction on the display device 114 (Act S18). In the present embodiment, the cash key B3 for paying with cash and the credit key B4 for paying with credit card are displayed as the payment options.

Fig. 8 is a diagram illustrating an example of the selection screen P2 displayed on the display device 114 by the controller 150 in Act S18. As shown in Fig. 8, the controller 150 of the registration apparatus 102a displays a payment amount display window W3 on the selection screen P2.

The payment amount display window W3 displays the total amount calculated in Act S16, the total commodity quantity, and commodity information B1 of the purchased commodity. The payment amount display window W3 also displays a message B2 prompting selection of the payment method. The payment amount display window W3 displays the cash key B3 for selecting cash and the credit key B4 for selecting the credit card, as the payment method.

Returning to the description in Fig. 7 again, the controller 150 determines whether or not the cash key B3 is operated (Act S20). If it is determined that the cash key B3 is operated (Yes in Act S20), the controller 150 respectively inquires the checkout apparatus 103 (103a ∼ 103f) about the status of the checkout apparatus 103 (103a ∼ 103f) via the communication control module 153 (Act S22).

Then, the controller 150 acquires the status of each checkout apparatus (103a ∼ 103f) via the communication control module 153 (Act S24).

The selection module 151 of the registration apparatus 102a executes the selection processing of selecting the checkout apparatus (103a ∼ 103f) which can execute the checkout processing (Act S26) to designate it as an execution destination of a checkout processing. Details of the processing executed in Act S26 are described later.

The controller 150 transmits the commodity information stored in the commodity information section F2 in Act S12 and the transaction information such as the total amount information calculated in Act S16 to the checkout apparatus 103a selected in Act s26 via the communication control module 153 (Act S28).

The notification module 152 of the registration apparatus 102a displays a guidance screen P3 (refer to Fig. 9) on the display device 117 for guiding the customer C to execute the checkout processing at the checkout apparatus 103a (Act S30). Although the specific example is described later, for example, the identification information K such as a number assigned to each of the checkout apparatuses (103a ∼ 103f) to uniquely specify the checkout apparatus 103 a is displayed.

Next, the controller 150 issues a voucher on which information including the transaction number for specifying the transaction (Act S32) is printed by the printer 116, and then the registration apparatus 102a ends the series of processing. The store clerk O hands over the issued voucher to the customer C. The customer C having the delivered voucher goes to the checkout apparatus 103a specified with the number displayed on the display device 117.

In Act S20, if the controller 150 determines that the cash key B3 is not operated (No in Act S20), the controller 150 determines whether the credit key B4 is operated (Act S34). If it is determined that the credit key B4 is operated (Yes in Act S34), the controller 150 proceeds to the processing in Act S36, otherwise the controller 150 returns to the processing in Act S20 (No in Act S34).

The controller 150 executes the checkout processing with the credit card based on the commodity information to which the sales registration processing is executed in Act S12 and the checkout information such as the total amount information calculated in Act S16 (Act S36).

The controller 150 issues a receipt on which the commodity information and the checkout information is printed by the printer 116 (Act S38), and the registration apparatus 102a ends the series of processing.

In this way, if the customer C uses the credit card, the deposition and the reception of cash by the customer C is not performed in the checkout system 101. Therefore, in the registration apparatus 102a, the sales registration processing and the checkout processing are executed by the operation of the store clerk O. In this case, the registration apparatus 102a does not display a message indicating execution of the checkout processing by the customer C at the checkout apparatus 103a. Therefore, the customer C finishes the checkout processing at the registration apparatus 102a without performing the checkout processing at the checkout apparatus 103a.

Next, the flow of the processing executed by the controller 50 of the checkout apparatus 103a is described. First, the controller 50 of the checkout apparatus 103a confirms whether or not there is an inquiry about the status of the checkout apparatus 103a from the registration apparatus 102a (Act S40). If there is the inquiry about the status of the checkout apparatus 103a (Yes in Act S40), the controller 50 proceeds to the processing in Act S42, otherwise the controller 50 repeats the processing in Act S40 (No in Act S40).

The controller 50 transmits the status of the checkout apparatus 103a, in other words, an operating state or a standby state, to the registration apparatus 102a via the communication control module 155 (Act S42).

The controller 50 confirms whether or not the transaction information transmitted from the registration apparatus 102a is received (Act S44). If the transaction information is received (Yes in Act S44), the controller 50 proceeds to the processing in Act S46, otherwise the controller 50 repeats the processing in Act S44 (No in Act S44).

The notification module 154 of the checkout apparatus 103a displays the identification information K assigned to the checkout apparatus 103a on the display device 61 as shown in the screen N2 in Fig. 6 (Act S46).

The controller 50 of the checkout apparatus 103a executes the checkout processing based on the transaction information received in Act S44 (Act S48).

The controller 50 determines whether or not the checkout processing is ended (Act S50), and if it is determined that the checkout processing is ended (Yes in Act S50), the series of processes in Fig. 7 is terminated. If it is determined that the checkout processing is not ended (No in Act S50), the controller 50 repeats the processing in Act S48.

In the flowchart of Fig. 7, the inquiries about the status of the checkout apparatus 103a (Act S40) and reception of the transaction information (Act S44) are generated and processed as interrupts.

### (Description of the Guidance Screen Displayed in the Registration Apparatus)

Fig. 9 is a diagram illustrating an example of the guidance screen P3 for indicating the designated checkout apparatus 103a displayed on the display device 117 of the registration apparatus 102a in Act S30 in Fig. 7.

The notification module 152 of the registration apparatus 102a displays guidance information including the identification information K assigned to the checkout apparatus 103a to guide the customer C with no confusion to the checkout apparatus 103a to execute the checkout processing at the checkout processing 103a as shown in Fig. 9.

Information that guides the customer C to the predetermined checkout apparatus 103a may be printed on the voucher issued by the printer 116 in addition to being displayed on the display device 117.

### (Description of the Flow of the Selection Processing to Select the Checkout Apparatus)

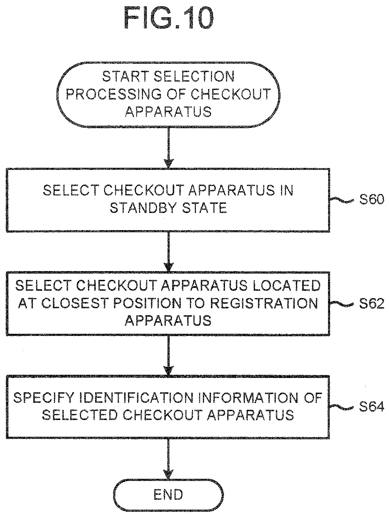

Next, the detailed flow of the selection processing (Act S26 in the flowchart in Fig. 7) in which the registration apparatus 102a designates the checkout apparatus 103a used by the customer C to execute the checkout processing is described with reference to the Fig. 10. Fig. 10 is a flowchart illustrating an example of the flow of the selection processing in which the registration apparatus 102a selects the checkout apparatus 103a which executes the checkout processing.

First, the selection module 151 of the registration apparatus 102a selects all the checkout apparatuses (103a ∼ 103f) in the standby state from all the checkout apparatuses (103a ∼ 103f) installed in the checkout area (Act S60). The selection module 151 uses the status of each of the checkout apparatuses (103a ∼ 103f) acquired in Act S24 in Fig. 7 to determine whether the checkout apparatus is in the standby state.

The selection module 151 designates one of the checkout apparatuses (103a ∼ 103f) closest to the registration apparatus 102a from the selected checkout apparatuses (103a ∼ 103f) in the standby state (Act S62). As described above, the distances between the registration apparatuses (102a and 102b) and the checkout apparatuses (103a ∼ 103 f) are measured in advance and stored in the HDD 136,respectively.

Then, the selection module 151 refers to the distances stored in the HDD 136 to designate the checkout apparatus 103a closest to the registration apparatus 102a among the checkout apparatuses (103a ∼ 103f) in the standby state. In other words, the selection module 151 designates the checkout apparatus (103a ∼ 103f) which executes the checkout processing based on a priority order of each checkout apparatus (103a ∼ 103f) assigned in an ascending order of the distance from each of the registration apparatuses (102a and 102b) to each of the checkout apparatuses (103a ∼ 103f). For example, if the checkout apparatus 103a located at a position closest to the registration apparatus 102a is in use, the selection module 151 designates the checkout apparatus 103b which is the second in the priority order closest to the registration apparatus 102a.

The selection module 151 specifies the unique identification information K (the number of the checkout apparatus 103a) previously assigned to the checkout apparatus 103a designated in Act S62 (Act S64). The specified identification information K is displayed on the display device 61 by the notification module 154 as described above. The specified identification information K is also displayed on the display device 117 by the notification module 152.

As described above, according to the checkout apparatus (103a ∼ 103f) of the embodiment, the communication control module 155 (in particular, reception module) receives the transaction information for instructing that the checkout apparatus 103a is designated as the execution destination of the checkout processing from the registration apparatus 102a. On condition that the communication control module 155 receives the transaction information, the notification module 154 switches the screen displayed on the display device 61 to notify the customer C that the checkout apparatus 103a is designated as the execution destination of the checkout processing. Therefore, the customer C who executes the checkout processing can go to the checkout apparatus 103a, i.e., execution destination of the checkout processing, without being confused.

According to the checkout apparatus (103a ∼ 103f) of the embodiment, the notification module 154 of the designated checkout apparatus 103a displays the identification information K unique to the checkout apparatus 103a on the display device 61 of the checkout apparatus 103a. Therefore, the customer C who executes the checkout processing can go to the checkout apparatus 103a, i.e., execution destination of the checkout processing, without being confused.

Furthermore, according to the checkout system 101 of the embodiment, the selection module 151 of the registration apparatus 102a which executes the sales registration of the commodity purchased by the customer C designates the checkout apparatus (103a ∼ 103f), i.e., execution destination of the checkout processing, based on both a use state of the checkout apparatus (103a ∼ 103f) which executes the checkout processing according to the commodity information of the commodity to which the sales registration is executed by the registration apparatus 102a and the priority order of the checkout apparatus (103a ∼ 103f) set according to the distance from the registration apparatus 102a which executes the sales registration of commodities purchased by the customer C. The communication control module 153 (in particular, transmission module) of the registration apparatus 102a transmits a message that it is designated as the checkout apparatus which executes the checkout processing to the checkout apparatus 103a. The communication control module 155 (in particular, reception module) of the checkout apparatus 103a receives the message from the registration apparatus 102a, and the notification module 154 switches the display screen on the checkout apparatus 103a to notify that the checkout apparatus 103a is designated as the destination of the checkout processing. Therefore, depending on the congestion situation of the checkout apparatus (103a ∼ 103f), the checkout apparatus (103a ∼ 103f) suitable to carry out the checkout processing can be selected or designated.

According to the checkout system 101 of the embodiment, the priority order is assigned to the plurality of the checkout apparatuses (103a ∼ 103f) in the ascending order of distances from the registration apparatuses (102a and 102b). Therefore, the checkout apparatus (103a ∼ 103f) located as close as possible from the customer C (who is next to a particular registration apparatus) is preferentially designated by the selection module 151.

According to the checkout system 101 of the embodiment, the notification module 152 of the registration apparatus 102a displays the information indicating the checkout apparatus 103a designated by the selection module 151 on the display device 117 of the registration apparatus 102a. Therefore, the customer C confirms the display device 117 of the registration apparatus 102a and can recognize the checkout apparatus 103a on which the customer C is requested to execute the checkout processing.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope and framework of the invention.

For example, in the embodiment, the notification is carried out such that the identification information K is displayed on the display device 61 of the corresponding checkout apparatus (103a ∼ 103f); however, the notification may be executed by displaying the identification information K on the information display section 70 of each the checkout apparatus (103a ∼ 103f). As shown in Fig. 3, since the information display section 70 is installed at a higher position compared with the display device 61, it is easier for the customer C to see the displayed identification information K.

In the embodiment, the registration apparatus 102a displays the identification information K indicating the designated checkout apparatus 103a on the display device 117, In Act S32 in Fig. 7, the identification information K indicating the checkout apparatus 103a designated by the selection module 151 may be printed on the voucher printed and issued by the printer 116 of the registration apparatus 102a.

## Claims

1. A checkout system, comprising:
a registration apparatus configured to execute registration of commodities selected for purchase by a customer; and
a checkout apparatus configured to execute checkout processing based on commodity registration information from the registration apparatus, wherein
the registration apparatus includes a processor that is programmed to select the checkout apparatus as an execution destination of the checkout processing based on a use state of the checkout apparatus and a priority order of the checkout apparatus assigned in relation to the registration apparatus and to issue an instruction to the checkout apparatus indicating that the checkout apparatus is designated as an execution destination of the checkout processing, and
the checkout apparatus includes a display and a processor programmed to control the display of the checkout apparatus to display a notification that the checkout apparatus is designated as the execution destination of the checkout processing.

2. The checkout system according to claim 1, wherein the checkout apparatus is selected from a plurality of checkout apparatuses, each of which is networked with the registration apparatus so that the commodity registration information can be transmitted from the registration apparatus to any one of the checkout apparatuses.

3. The checkout system according to claim 2, wherein the priority order is assigned in an ascending order of a distance from the registration apparatus to each of the checkout apparatuses.

4. The checkout system according to any one of claims 1 to 3, wherein the registration apparatus includes a display, and the processor is configured to control the display of the registration apparatus to display information indicating the checkout apparatus designated as the execution destination of the checkout processing.

5. The checkout system according to claim 4, wherein the registration apparatus includes a printer configured to print a voucher with a code that is to be read by the checkout apparatus to identify the commodity registration information, and with information indicating the checkout apparatus designated as the execution destination of the checkout processing.

6. The checkout system according to claim 5, wherein the information indicating the checkout apparatus designated as the execution destination of the checkout processing is displayed on the display of the checkout apparatus.

7. The checkout system according to claim 6, wherein the display of the checkout apparatus is a display mounted on a main body of the checkout apparatus and used for the checkout processing.

8. The checkout system according to claim 6, wherein the display of the checkout apparatus is a display mounted on a display pole extending above a main body of the checkout apparatus and used for displaying an error condition of the checkout apparatus.

9. A method for processing a checkout in a checkout system including a registration apparatus and a plurality of checkout apparatuses, the method carried out by the registration apparatus, comprising:
executing commodity registration to generate commodity registration information;
upon completion of commodity registration, acquiring operating states of the checkout apparatuses and selecting one of the checkout apparatuses that are in a standby state as an execution destination of the checkout processing;
printing a code that is used during checkout processing to identify the commodity registration information; and
displaying information indicating the checkout apparatus designated as the execution destination of the checkout processing.

10. The method according to claim 9, wherein each of the checkout apparatuses is networked with the registration apparatus so that the commodity registration information can be transmitted from the registration apparatus to any one of the checkout apparatuses.

11. The method according to claim 9 or 10, further comprising:
printing the information indicating the checkout apparatus designated as the execution destination of the checkout processing along with the code.

12. A method for processing a checkout in a checkout system including a registration apparatus configured to execute registration of commodities selected for purchase by a customer, and a plurality of checkout apparatuses, the method carried out by one of the checkout apparatuses designated by the registration apparatus as an execution destination of checkout processing for commodity registration information generated by the registration apparatus, comprising:
displaying a standby state; and
upon being notified of designation as the execution destination of checkout processing, switching from a display of the standby state to a display of information from the registration apparatus indicating designation as the execution destination of checkout processing; and
executing the checkout processing based on the commodity registration information including input of payment from the customer and output of receipt along with any change.

13. The method according to claim 12, further comprising:
after switching and before executing, reading a code supplied by the customer and retrieving the commodity registration information using the code.

14. The method according to claim 12 or 13, wherein the display of information from the registration apparatus indicating designation as the execution destination of checkout processing is displayed on a main display that is used during the checkout processing.

15. The method according to any one of claims 12 to 14, wherein the display of information from the registration apparatus indicating designation as the execution destination of checkout processing is displayed on a display mounted on a display pole extending above a main body of the checkout apparatus and used for displaying an error condition of the checkout apparatus.
